# FASCICULE DE BREVET EUROPEEN

(11) **EP 1 557 922 B1**
(45) Date de publication et mention de la délivrance du brevet: **27.08.2014**
(21) Numéro de dépôt: 05354001.9
(22) Date de dépôt: 06.01.2005
(51) Int. Cl.: H02H 3/00, H02H 3/33

(54) **Dispositif de protection différentielle avec moyens de reglage simplifiés des paramètres de protection**
Differentialschutzvorrichtung mit vereinfachten Einstellmitteln für die Schutzparameter
Differential protection device with simplified adjusting means for the protection parameters

(30) Priorité: 22.01.2004 FR 0400605
(43) Date de publication de la demande: 27.07.2005
(73) Titulaire: Schneider Electric Industries SAS, 92500 Rueil-Malmaison (FR)
(72) Inventeur: Boudaud, Dominique, Schneider Electric Ind. SAS, 38050 Grénoble cedex 09 (FR)
(74) Mandataire: Tripodi, Paul

(56) Documents cités:
- EP-A- 0 936 716

## Description

### DOMAINE TECHNIQUE DE L'INVENTION

L'invention est relative à un dispositif de protection différentielle comportant :
- des moyens de mesure de courant différentiel, et
- une unité de traitement comprenant des moyens de réglage du seuil de courant de défaut et des moyens de réglage d'une temporisation, l'unité de traitement étant connectée auxdits moyens de mesure pour recevoir un signal représentatif d'un courant différentiel.

L'invention concerne également un disjoncteur comportant un tel dispositif de protection différentielle.

### ETAT DE LA TECHNIQUE

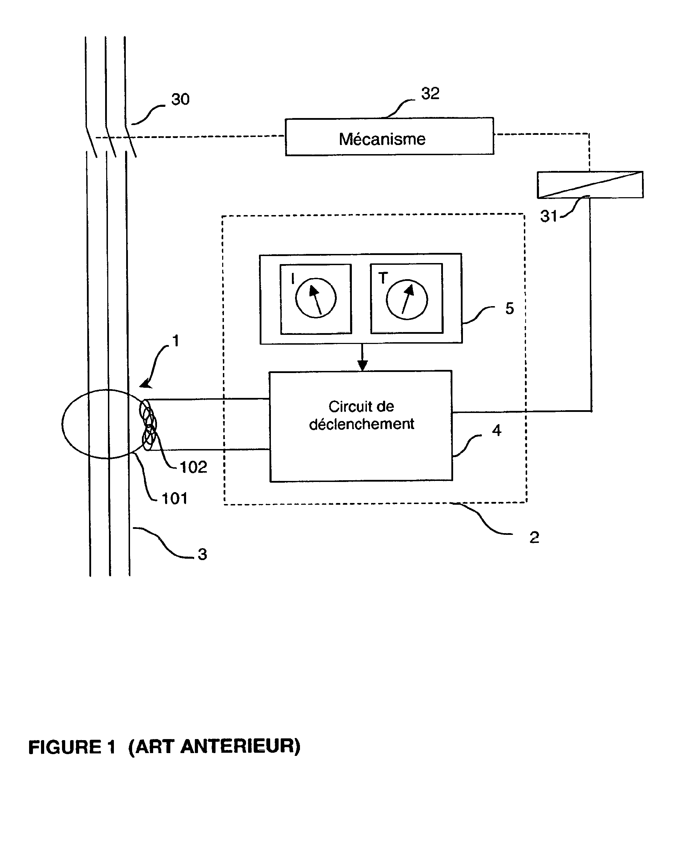

De manière connue, comme cela est illustré sur la figure 1, le dispositif de protection différentielle comportent des moyens de mesure de courant 1 relié à une unité de traitement 2. Les moyens de mesure sont généralement des capteurs de courant électrique fournissant un signal représentatif des courants différentiels qui peuvent circuler dans des lignes de courant électrique 3.

Ce type de dispositif de protection différentielle est généralement associé à un mécanisme 32 d'ouverture de contacts 30 placés en série avec les lignes de courant électrique.

Le dispositif de protection différentielle permet une protection des circuits en combinaison avec une gamme étendue de courant et de temporisation. L'ordre de déclenchement entraînant généralement l'ouverture des contacts est produit lorsque la valeur des signaux de courant dépasse un seuil prédéterminé pendant un temps prédéterminé.

Par ailleurs, l'unité de traitement du dispositif électrique comprend un circuit de déclenchement 4 relié à des moyens de réglage 5 comprenant des premiers moyens de réglage d'un seuil de courant et des seconds moyens de réglage de la valeur de la temporisation.

Pour effectuer les réglages des seuils de courant et de temporisation, il est bien connu d'utiliser des potentiomètres ou un commutateur à plusieurs positions.

Les dispositifs électriques de protection différentielle destinés à la protection des êtres humains possèdent des contraintes propres de sécurité imposées par la réglementation. Ainsi, lorsque le calibre de protection est choisi pour protéger des êtres humains, la norme impose que la temporisation de déclenchement soit minimale ou nulle.

Pour répondre à cet impératif de sécurité spécifique à la protection des êtres humains, certains dispositifs de protection connus comportent un double réglage simultané du seuil de déclenchement et de la valeur minimale de la temporisation. De manière connue, un commutateur spécifique à deux circuits de commutation est indispensable pour effectuer les deux opérations de réglage. En effet, pour effectuer lesdits réglages, le commutateur spécifique doit actionner simultanément deux contacts distincts par l'intermédiaire du même organe de commande dudit commutateur. Ce type de commutateur spécifique est d'une réalisation complexe, onéreuse et peu fiable. Le volume occupé par un tel commutateur est important.

### EXPOSE DE L'INVENTION

L'invention vise à remédier aux inconvénients de l'état de la technique, en proposant un dispositif de protection différentielle comportant des moyens de réglage de courant et de temporisation, de fabrication simple et économique et ayant un volume réduit.

Un dispositif de protection différentielle selon l'invention comportant des moyens de mesure de courant différentiel, une unité de traitement comprenant des moyens de réglage du seuil de courant de défaut et des moyens de réglage d'une temporisation, l'unité de traitement étant connectée auxdits moyens de mesure pour recevoir un signal représentatif d'un courant différentiel, et comportant des moyens de réglage du seuil de courant de défaut ayant des moyens de commutation à un contact pouvant prendre au moins deux positions, pour sélectionner un seuil de courant de défaut pour chacune des positions, et pour sélectionner pour une au moins desdites positions, une valeur minimale ou réduite de temporisation quel que soit le réglage initial des moyens de réglage de temporisation.

Dans un mode de réalisation particulier, lesdits moyens de commutation comportent un point commun relié à une ligne de référence et relié à des sorties, au moins une première sortie de sélection de temporisation minimale étant connectée auxdits moyens de réglage de temporisation pour fournir un signal de commande de temporisation minimale et au moins une seconde sortie de sélection de seuil de courant de défaut étant connectée à au moins une résistance de changement de calibre

Selon un développement de l'invention, le dispositif comporte une sortie de sélection de temporisation minimale polarisée par une ligne de polarisation.

Avantageusement des résistances de changement de calibre sont connectées en parallèle avec les moyens de mesure de courant, à travers le contact des moyens de commutation.

Avantageusement des résistances de changement de calibre sont connectées en série avec les moyens de mesure de courant, à travers le contact des moyens de commutation.

De préférence les moyens de commutation sont constitués d'un commutateur rotatif à commande axiale.

De préférence, les moyens de réglage du seuil de courant sélectionnent ladite valeur minimale de la temporisation en fournissant un signal de commande de temporisation minimale à des moyens d'annulation de la temporisation de l'unité de traitement.

Selon un mode développement de l'invention, les moyens de réglage de la temporisation comprennent une résistance variable montée en série avec un condensateur relié à une ligne de référence et que les moyens d'annulation de la temporisation commandent l'ouverture ou la fermeture de la liaison entre ledit condensateur et la ligne de référence.

Avantageusement, les moyens d'annulation de temporisation comportent une entrée pour recevoir le signal de commande de temporisation minimale, des moyens de comparaison pour comparer ledit signal de commande à un seuil de référence et des moyens d'interruption connectés en série avec le condensateur de temporisation pour réduire ou annuler la temporisation d'un déclenchement.

Un disjoncteur selon un mode de réalisation de l'invention comporte des contacts d'ouverture reliés à des lignes de courant électrique, un relais pour commander l'ouverture desdits contacts à travers un mécanisme, un dispositif de protection différentielle tel que défini ci-dessus comportant les moyens de mesure de courant différentiel disposés sur les desdites lignes de courant, une unité de traitement fournissant un signal de déclenchement auxdits relais si un défaut est détecté et des moyens de réglage du seuil de courant ayant une position pour sélectionner une valeur minimale de temporisation.

### BREVE DESCRIPTION DES FIGURES

D'autres avantages et caractéristiques ressortiront plus clairement de la description qui va suivre d'un mode particulier de réalisation de l'invention, donné à titre d'exemple non limitatif, et représenté aux dessins annexés sur lesquels :
- La figure 1 représente un schéma bloc général d'un dispositif de protection différentielle de type connu ;
- La figure 2 représente un schéma bloc général d'un dispositif de protection différentielle selon un mode de réalisation de l'invention ;
- La figure 3 représente un schéma bloc détaillé d'un dispositif de protection différentielle selon un mode de réalisation de l'invention ;
- La figure 4 représente une variante des moyens de réglage du seuil de courant selon un autre mode de réalisation de l'invention.

### DESCRIPTION DETAILLEE D'UN MODE DE REALISATION

Un dispositif de protection comprend au moins deux moyens de réglage des paramètres de protection. Ces paramètres de protection sont principalement liés au seuil de courant de défaut et à la temporisation c'est à dire la durée pendant laquelle le courant électrique de défaut peut circuler.

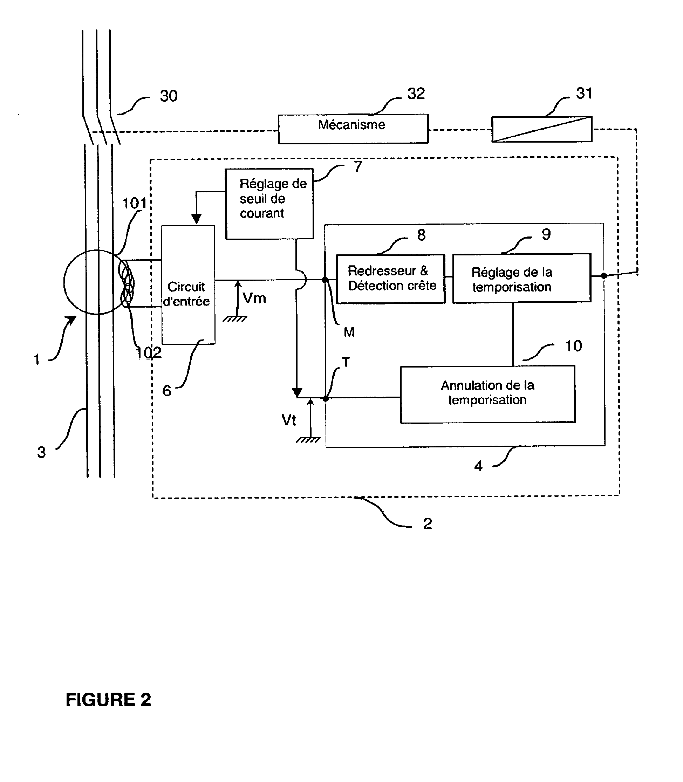

Selon un mode de réalisation de l'invention, la figure 2 montre sous la forme d'un schéma blocs, un dispositif de protection comprenant des capteurs de courant 1, un circuit de déclenchement 4 ainsi que des moyens de réglage des seuils de courant de défaut 7 et de temporisation 9.

Les capteurs de courant 1 comportent un tore de mesure à circuit magnétique 101 disposé autour des conducteurs des lignes de courant 3 à protéger. Ainsi, les lignes de courant 3 forment l'enroulement primaire du tore de mesure. Un enroulement secondaire 102 est connecté à un circuit d'entrée 6 de l'unité de traitement 2. L'enroulement secondaire 102 fourni au circuit 6 un signal représentatif d'un courant différentiel pouvant circuler dans les lignes de courant électrique 3.

Le circuit d'entrée 6 fournit ensuite un signal de tension Vm au circuit de déclenchement 4 via une entrée de mesure M. Ce premier signal Vm est représentatif du courant électrique différentiel mesuré par les capteurs de courant 1. Le signal de tension Vm dépend aussi du seuil de courant fixé avec les moyens de réglage de seuil de courant de défaut 7.

En pratique, une sortie du circuit d'entrée 6 est connectée à un circuit redresseur et de détection de crête 8 qui fournit une tension redressée aux moyens de réglage de la temporisation 9. Dès qu'une tension crête suffisante est mesurée à la sortie du redresseur 8, le circuit de déclenchement 4 peut fournir un ordre après une temporisation plus ou moins longue.

Par ailleurs, les moyens de réglage du seuil de courant 7 fixent la valeur d'un second signal fourni au circuit de déclenchement 4 via une entrée de temporisation T. Ce second signal Vt dépendant du seuil de courant choisi, est fourni à des moyens de commande 10 d'annulation de temporisation. Suivant sa valeur, cette tension Vt, modifie ou ne modifie pas la valeur de la temporisation préalablement fixée par des moyens de réglage de la temporisation 9.

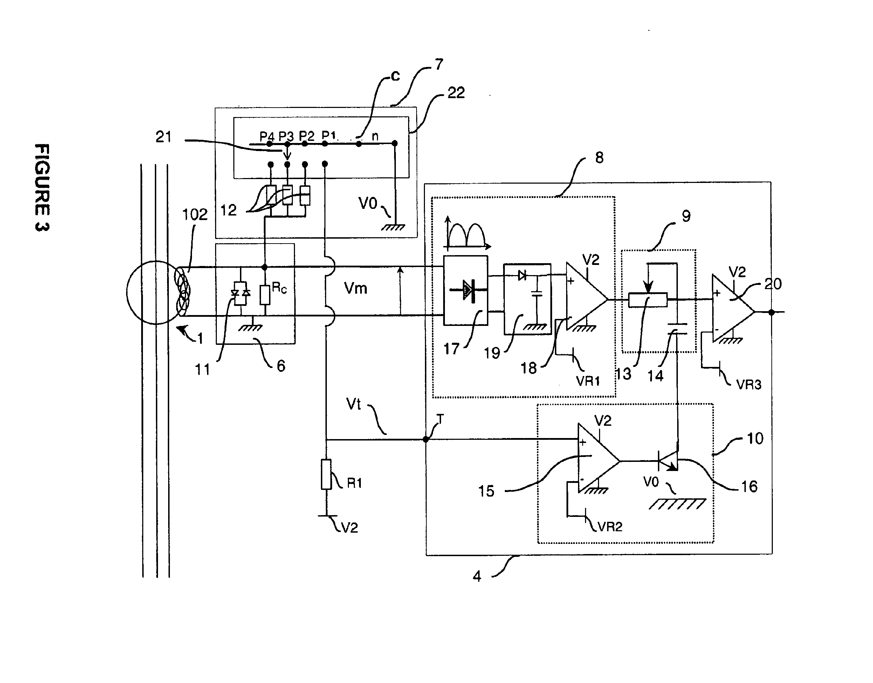

Suivant la figure 3, le circuit secondaire 102 du tore de mesure est connecté en parallèle avec une résistance de charge Rc du circuit d'entrée 6. La résistance de charge Rc du circuit d'entrée détermine la sensibilité maximale de l'unité de traitement 2 et, par conséquent, le seuil de courant minimal du dispositif de protection. Ce seuil pourra être modifié avec les moyens de réglage correspondants 7. Deux diodes 11 "tête-bêche" sont placées en parallèle avec la résistance de charge Rc afin de protéger le circuit de déclenchement 4 de pics de tension observés au niveau des capteurs de courants 1.

Les moyens de réglage du seuil de courant 7 comprennent des moyens de commutation 22 ayant un point commun C relié à une ligne de référence V0 ou la masse et relié à des sorties, au moins une première sortie de sélection de temporisation minimale étant connectée aux moyens de réglage de temporisation pour fournir un signal de commande de temporisation minimale, au moins une seconde sortie de sélection de seuil de courant de défaut étant connectée à au moins une résistance de changement de calibre 12.

Ladite sortie de sélection de temporisation minimale connectée à l'entrée de temporisation T du circuit de déclenchement 4 est polarisée par une ligne de polarisation V2.

De préférence, lesdits moyens de commutation 22 comprennent un contact 21 pouvant prendre au moins deux positions. Parmi ces positions, au moins une première position P1, permet de relier la sortie de sélection de temporisation minimale à l'entrée de temporisation T du circuit de déclenchement 4. Suivant le mode de réalisation décrit, le contact 21 des moyens de commutation 22 est alors sur la position P1. Hormis la première position P1 qui permet de mettre à la masse l'entrée de temporisation T du circuit de déclenchement 4. D'autres positions P2, P3, P4 permettent de connecter des résistances 12 de différentes valeurs à placer en parallèle avec les capteurs de courant 1 et la résistance de charge RC du circuit d'entrée 6. De préférence; les moyens de commutation 22 sont constitués d'un commutateur rotatif à commande axiale.

Pour augmenter la valeur du seuil de courant de défaut accepté, ledit commutateur est positionné afin de mettre une résistance de changement de calibre 12 en parallèle avec la résistance de charge Rc. La résistance équivalente de l'ensemble est alors plus faible et il faut un courant différentiel plus élevé pour que le circuit de déclenchement 4 puisse envoyer un ordre. Chaque position du commutateur permet alors de fixer une valeur maximale de courant différentiel accepté et change ainsi le seuil de courant.

Les moyens de réglages de la temporisation 9, tels que représentés sur la figure 3, comprennent une résistance 13 montée en série avec un condensateur 14 relié à la masse du circuit. Le temps de charge du condensateur de temporisation 14 détermine la durée de la temporisation. Ce temps de charge dépend essentiellement des valeurs de la résistance 13 et du condensateur 14. Suivant ce mode de réalisation, une résistance 13 variable permet d'obtenir le réglage souhaité de la temporisation.

Les moyens de commande 10 d'annulation de temporisation comprennent un comparateur 15 alimenté entre une tension V2 et la masse. La tension de sortie dudit comparateur commande la conduction ou le blocage d'un transistor de commande 16. Dans le mode de réalisation de la figure 3, le transistor 16 est branché en série avec le condensateur de temporisation 14 des moyens de réglage de la temporisation 9. De préférence, le transistor est placé entre le condensateur 14 et la masse ou la ligne de référence V0 du circuit. En fonction de la tension appliquée entre la base et l'émetteur du transistor 16, le condensateur 14 des moyens de réglage de la temporisation 9 sera relié à la masse ou alors flottant.

Le circuit redresseur et détecteur de crête 8 comprend un redresseur double alternance 17. De préférence, on utilise un redresseur électronique sans seuil constitué notamment de deux amplificateurs opérationnels non représentés. Le redresseur est relié à un comparateur 18 par un détecteur de crête 19. Le comparateur 18 est alimenté entre une tension V2 et la masse. En outre, la tension de crête est appliquée à une des entrées du comparateur 18 afin d'être comparée à une tension de référence VR1. La valeur de la tension de référence est comprise entre la valeur V2 et zéro. Ainsi, si la tension crête appliquée sur la borne positive du comparateur 18 est supérieure à la tension de référence VR1, une tension de sortie est proche de la tension V2. En outre, si la tension crête est inférieure à la tension de référence VR1, la tension à la sortie du comparateur 18 est nulle.

La tension de sortie du comparateur 18 est ensuite appliquée aux moyens de réglage de la temporisation 9. Ainsi, en fonction de la valeur de la temporisation prédéterminée, le circuit de déclenchement 4 peut envoyer un ordre plus ou moins rapidement. Si la valeur de la résistance variable 13 est faible, le circuit de déclenchement 4 réagit rapidement. Lorsque la résistance 13 est élevée, un délai important apparaît entre le moment où la tension crête est égale à la tension de référence et le moment où le circuit de déclenchement 4 envoie un ordre.

Un comparateur 20 identique à ceux précédemment décrits, est placé entre la sortie des moyens de réglage de la temporisation 9.

La particularité de l'unité de traitement 2 concerne plus spécifiquement les moyens de réglage du seuil de courant 7 qui comprennent un commutateur 22 ayant un contact 21 pouvant prendre au moins 2 positions. En effet, ce commutateur 22 a la particularité d'avoir au moins une position, notamment la position P1, pour laquelle sont réglées concomitamment la valeur de la temporisation minimale ou réduite et la valeur du seuil de courant de défaut. Ce réglage de la valeur de la temporisation minimale ou réduite est imposé quelle que soit la valeur de temporisation initialement fixée par les moyens d'ajustement correspondants 9. Dans l'exemple de réalisation, lorsque le contact 21 du commutateur 22 se trouve sur la position P1, le calibre de courant différentiel de défaut est fixé à 30mA et la temporisation est forcée à 0 seconde. Ce réglage répond alors aux impératifs normatifs qui imposent que les dispositifs de protection différentielle destinés à la protection des être humains forcent leur temporisation à 0 seconde pour le calibre minimal de 30mA.

Le fonctionnement du dispositif de protection selon les figures 2 et 3 est le suivant :

Lorsque le calibre minimal est sélectionné dans le but de protéger des êtres humains, le contact 21 du commutateur 22 est placé sur la position P1. Le potentiel à la masse du point C du commutateur 22 est alors appliqué au niveau de l'entrée de temporisation du circuit de déclenchement 4. En pratique, la tension Vt appliquée à un première entrée du comparateur 15 des moyens de commande d'annulation 10 est nulle. Sachant que la valeur de la tension de référence VR2 appliquée sur la seconde entrée du comparateur est comprise entre 0 et V2, la valeur de la tension d'entrée est alors inférieure à la tension de référence VR2. La tension de sortie du comparateur 15 est alors égale à 0. Le transistor 16 n'est pas commandé et n'est donc pas passant. Il est équivalent à un interrupteur ouvert. Le condensateur de temporisation 14 des moyens de réglage de temporisation 9 n'est plus relié à la masse ce qui a pour effet d'annuler la valeur de la temporisation. Les moyens de commande d'annulation 10 ont donc envoyé un ordre d'annulation de la valeur de temporisation.

En outre, le fait de placer le contact 21 du commutateur 22 sur la position P1, isole l'ensemble des résistances de changement de calibre 12 connectées en parallèle avec la résistance de charge Rc. La tension de mesure Vm est mesurée aux bornes d'une résistance équivalente maximale égale à la résistance de charge Rc.

Ainsi, dés qu'un courant différentiel supérieur au courant minimale sera détecté au niveau des capteurs de courant 1, la tension Vm correspondante appliquée au circuit de déclenchement 4 déclenchera l'envoi quasi-instantané d'un ordre commande.

Lorsque l'on choisi un calibre différent du calibre minimal, le contact 21 du commutateur 22 est alors placé sur une position différente de celle décrite ci-dessus. La tension appliquée à l'entrée de temporisation T du circuit de déclenchement 4 est alors différente de zéro. L'entrée T n'est plus reliée à la ligne de référence V0. Ainsi, la tension Vt appliquée à la première entrée du comparateur 15 des moyens de commande d'annulation 10 est égale à V2. La tension V2 est appliquée via la résistance de polarisation R1. La valeur de la tension de référence VR2 appliquée sur la seconde entrée du comparateur 15 étant comprise entre 0 et V2, la sortie du comparateur 15 commande la base du transistor de commande 16 et rend passant ledit transistor. Le transistor de commande 16 est alors équivalent à un interrupteur fermé. Le condensateur de temporisation 14 des moyens de réglage de la temporisation est donc relié à la masse et participe intégralement à la valeur de la temporisation. Les moyens de commande d'annulation de la temporisation 10 n'ont donc pas envoyé d'ordre d'annulation de la valeur de temporisation et sont alors sans influence sur la durée de la temporisation.

En outre, lorsque le contact 21 du commutateur 22 se trouve dans la position décrite ci-dessus différente de la position P1, la tension Vm est alors mesurée aux bornes d'une résistance équivalente égale à la somme de la résistance de charge Rc avec une résistance de changement de calibre 12 en parallèle.

Ainsi, dés qu'un courant différentiel correspondant au seuil de courant de défaut sera détecté au niveau des capteurs de courant 1, le circuit de déclenchement 4 enverra un ordre plus ou moins rapidement après l'apparition du courant de défaut. Dans ce cas, la valeur de la temporisation est alors choisie en fonction de la valeur de la résistance variable 13 des moyens de réglage correspondants.

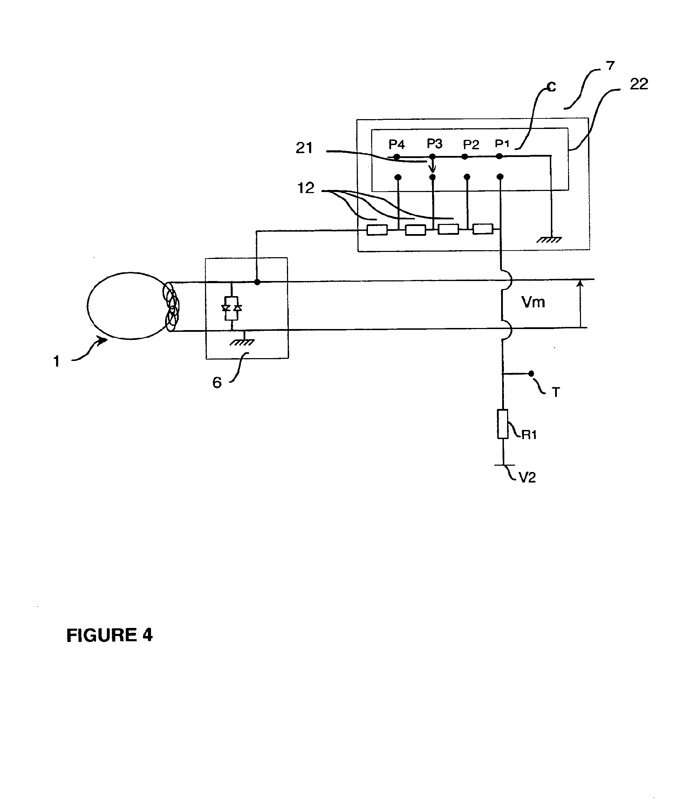

Selon une première variante de réalisation représenté sur la figure 4, les résistances de changement de calibre 12 associées aux différentes positions du contact 21 du commutateur 22, sont connectées respectivement en série par rapport aux moyens de mesure 1. Le calibre minimal correspond à la position du commutateur où aucune desdites résistances de changement de calibre 12 n'est court-circuitée. La résistance équivalente aux bornes de laquelle la tension Vm est mesurée est alors maximale et correspond à une sensibilité maximale. La résistance équivalente de charge est égale à la somme de toutes les résistances 12 montées en série.

Selon une seconde variante de réalisation, les moyens de commutation 22 peuvent être constitués d'un commutateur à commande latérale.

Selon une autre variante de réalisation, les moyens de réglage de la temporisation 9, comprennent une résistance 13 montée en série avec un condensateur variable relié à la masse du circuit. Le condensateur de temporisation variable permet d'obtenir le réglage souhaité de la temporisation.

Selon une variante de réalisation de l'invention, le transistor de commande 16 peut être connecté en parallèle de la résistance variable 13 des moyen de réglage de la temporisation 9.

Les tensions de référence des entrées des comparateurs VR1, VR2, VR3 peuvent avantageusement être de même valeur et avoir une tension comprise entre la tension de la ligne de référence V0 ou la masse et la tension d'alimentation ou de polarisation V2.

La fonction d'interrupteur commandé jouée par le transistor bipolaire 16 peut être aussi obtenue par un transistor à effet de champ (FET) ou un relais.

D'autres positions du contact 21 des moyens de commutation 22 différentes de la position P1, peuvent aussi permettre de relier la sortie de sélection de temporisation à l'entrée temporisation T du circuit de déclenchement 4.

Le présent dispositif de protection différentielle est particulièrement destiné aux disjoncteurs ou aux interrupteurs électriques. Lorsque l'unité de traitement 2 est installée dans un interrupteur différentiel ou associé à un disjoncteur, l'ordre de commande envoyé par le circuit de déclenchement 4 est destiné à un dispositif de coupure des lignes de courant électrique 3. L'ordre de commande envoyé au relais de commande 31 ouvre des contacts 30 par l'intermédiaire d'un mécanisme de commande 32. Lesdits contacts 30 sont placés en série avec les lignes de courant électrique 3.

Un dispositif selon l'invention peut être destiné à mesurer des courants polaires dans des conducteurs de lignes de courant électrique. Le tore de mesure sera alors remplacé par des capteurs de courant placés respectivement autour de chaque conducteur. Un signal de courant de défaut différentiel est alors reconstitué dans une unité de traitement possédant des moyens de réglage du seuil de courant fonctionnant comme dans les modes de réalisation décrits ci-dessus.

## Revendications

1. Dispositif de protection différentielle comportant :
- des moyens de mesure (1) de courant différentiel, et
- une unité de traitement (2) comprenant des moyens de réglage du seuil de courant de défaut (7) et des moyens de réglage d'une temporisation (9), l'unité de traitement étant connectée auxdits moyens de mesure (1) pour recevoir un signal représentatif d'un courant différentiel,
**caractérisé en ce que**
les moyens de réglage du seuil de courant de défaut (7) comportent des moyens de commutation (22) ayant un contact (21) pouvant prendre au moins deux positions, pour sélectionner un seuil de courant de défaut pour chacune des positions, et pour sélectionner pour une au moins desdites positions, une valeur minimale ou réduite de temporisation quel que soit le réglage initial des moyens de réglage de temporisation (9).

2. Dispositif de protection selon la revendication 1 **caractérisé en ce que** lesdits moyens de commutation (22) comporte un point commun (C) relié à une ligne de référence (V0) et relié à des sorties,
- au moins une première sortie de sélection de temporisation minimale étant connectée auxdits moyens de réglage de temporisation (9) pour fournir un signal de commande de temporisation minimale,
- au moins une seconde sortie de sélection de seuil de courant de défaut étant connectée à au moins une résistance de changement de calibre (12).

3. Dispositif de protection selon la revendication 2 **caractérisé en ce que** ladite sortie de sélection de temporisation minimale est polarisée par une ligne de polarisation (V2).

4. Dispositif de protection selon l'une quelconque des revendications 1 à 3 **caractérisé en ce que** les résistances de changement de calibre (12) sont connectées en parallèle avec les moyens de mesure de courant (1), à travers le contact (21) des moyens de commutation (22).

5. Dispositif de protection selon l'une quelconque des revendications 1 à 3 **caractérisé en ce que** les résistances de changement de calibre (12) sont connectées en série avec les moyens de mesure de courant (1), à travers le contact (21) des moyens de commutation (22).

6. Dispositif de protection selon l'une quelconque des revendications 1 à 5 caractérisé en ce lesdits moyens de commutation (22) sont constitués d'un commutateur rotatif à commande axiale.

7. Dispositif de protection selon l'une quelconque des revendications 1 à 6 **caractérisé en ce que** les moyens de réglage du seuil de courant (7) sélectionnent ladite valeur minimale de la temporisation en fournissant un signal de commande de temporisation minimale (Vt) à des moyens d'annulation de la temporisation (10) de l'unité de traitement (2).

8. Dispositif de protection selon la revendication 7 **caractérisé en ce que** les moyens de réglage de la temporisation (9) comprennent une résistance variable (13) montée en série avec un condensateur (14) relié à une ligne de référence (V0) et que les moyens d'annulation de la temporisation (10) commandent l'ouverture ou la fermeture de la liaison entre ledit condensateur et la ligne de référence (V0).

9. Dispositif de protection selon les revendications 7 et 8 **caractérisé en ce que** les moyens d'annulation de temporisation (10) comportent une entrée (T) pour recevoir le signal de commande de temporisation minimale (Vt), des moyens de comparaison (15) pour comparer ledit signal de commande à un seuil de référence (VR1) et des moyens d'interruption (16) connectés en série avec le condensateur de temporisation (14) pour réduire ou annuler la temporisation d'un déclenchement.

10. Disjoncteur comportant des contacts d'ouverture (30) reliés à des lignes de courant électrique (3) et un relais (31) pour commander l'ouverture desdits contacts (30) à travers un mécanisme (32) **caractérisé en ce qu'**il comporte un dispositif de protection différentielle selon l'une quelconque des revendications précédentes comportant, des moyens de mesure de courant différentiel (1) disposés sur lesdites lignes de courant (3), une unité de traitement (2) fournissant un signal de déclenchement auxdits relais si un défaut est détecté et des moyens de réglage du seuil de courant ayant une position pour sélectionner une valeur minimale de temporisation.

## Patentansprüche

1. Differenzschutzvorrichtung, die aufweist:
- Differenzstrom-Messeinrichtungen (1), und
- eine Verarbeitungseinheit (2), die Einrichtungen zur Einstellung der Fehlerstromschwelle (7) und Einrichtungen zur Einstellung einer Verzögerung (9) enthält, wobei die Verarbeitungseinheit mit den Messeinrichtungen (1) verbunden ist, um ein für einen Differenzstrom repräsentatives Signal zu empfangen,
**dadurch gekennzeichnet, dass**
die Einstelleinrichtungen der Fehlerstromschwelle (7) Schalteinrichtungen (22) aufweisen, die einen Kontakt (21) haben, der mindestens zwei Stellungen einnehmen kann, um eine Fehlerstromschwelle für jede der Stellungen auszuwählen, und um für mindestens eine der Stellungen einen minimalen oder reduzierten Verzögerungswert auszuwählen, unabhängig von der Ausgangseinstellung der Einrichtungen zur Verzögerungseinstellung (9).

2. Schutzvorrichtung nach Anspruch 1, **dadurch gekennzeichnet, dass** die Schalteinrichtungen (22) einen gemeinsamen Punkt (C) aufweisen, der mit einer Bezugsleitung (V0) und mit Ausgängen verbunden ist,
- wobei mindestens ein erster Ausgang der Auswahl einer minimalen Verzögerung mit den Einrichtungen zur Verzögerungseinstellung (9) verbunden ist, um ein Steuersignal minimaler Verzögerung zu liefern,
- wobei mindestens ein zweiter Ausgang der Auswahl einer Fehlerstromschwelle mit mindestens einem Nennleistungs-Änderungswiderstand (12) verbunden ist.

3. Schutzvorrichtung nach Anspruch 2, **dadurch gekennzeichnet, dass** der Auswahlausgang minimaler Verzögerung von einer Polarisationsleitung (V2) polarisiert wird.

4. Schutzvorrichtung nach einem der Ansprüche 1 bis 3, **dadurch gekennzeichnet, dass** die Nennleistungs-Änderungswiderstände (12) mit den Strommesseinrichtungen (1) über den Kontakt (21) der Schalteinrichtungen (22) parallelgeschaltet sind.

5. Schutzvorrichtung nach einem der Ansprüche 1 bis 3, **dadurch gekennzeichnet, dass** die Nennleistungs-Änderungswiderstände (12) mit den Strommesseinrichtungen (1) über den Kontakt (21) der Schalteinrichtungen (22) in Reihe geschaltet sind.

6. Schutzvorrichtung nach einem der Ansprüche 1 bis 5, **dadurch gekennzeichnet, dass** die Schalteinrichtungen (22) aus einem Drehschalter mit axialer Steuerung bestehen.

7. Schutzvorrichtung nach einem der Ansprüche 1 bis 6, **dadurch gekennzeichnet, dass** die Einstelleinrichtungen der Stromschwelle (7) den minimalen Wert der Verzögerung wählen, indem sie ein Steuersignal minimaler Verzögerung (Vt) an Einrichtungen zur Aufhebung der Verzögerung (10) der Verarbeitungseinheit (2) liefern.

8. Schutzvorrichtung nach Anspruch 7, **dadurch gekennzeichnet, dass** die Einstelleinrichtungen der Verzögerung (9) einen variablen Widerstand (13) enthalten, der mit einem mit einer Bezugsleitung (V0) verbundenen Kondensator (14) in Reihe geschaltet ist, und dass die Einrichtungen zur Aufhebung der Verzögerung (10) das Öffnen oder Schließen der Verbindung zwischen dem Kondensator und der Bezugsleitung (V0) steuern.

9. Schutzvorrichtung nach den Ansprüchen 7 und 8, **dadurch gekennzeichnet, dass** die Verzögerungsaufhebungseinrichtungen (10) einen Eingang (T) zum Empfang des Steuersignals minimaler Verzögerung (Vt), Vergleichseinrichtungen (15), um das Steuersignal mit einer Bezugsschwelle (VR1) zu vergleichen, und Unterbrechungseinrichtungen (16) aufweisen, die mit dem Verzögerungskondensator (14) in Reihe geschaltet sind, um die Verzögerung einer Auslösung zu reduzieren oder aufzuheben.

10. Schutzschalter, der mit Stromleitungen (3) verbundene Öffnungskontakte (30) und ein Relais (31) aufweist, um das Öffnen der Kontakte (30) über einen Mechanismus (32) zu steuern, **dadurch gekennzeichnet, dass** er eine Differenzschutzvorrichtung nach einem der vorhergehenden Ansprüche aufweist, die Differenzstrom-Messeinrichtungen (1), die auf den Stromleitungen (3) angeordnet sind, eine Verarbeitungseinheit (2), die ein Auslösesignal an die Relais liefert, wenn ein Fehler erfasst wird, und Einstelleinrichtungen der Stromschwelle aufweist, die eine Stellung zur Auswahl eines minimalen Verzögerungswerts haben.

## Claims

1. Differential protection device comprising :
- differential current measuring means (1), and
- a processing unit (2) comprising means for adjusting the fault current threshold setting (7) and means for adjusting a time delay setting (9), the processing unit being connected to said measuring means (1) to receive a signal representative of a differential current,
**characterized in that**
the means for adjusting the fault current threshold setting (7) comprise switching means (22) having a contact (21) able to take at least two positions, to select a fault current threshold for each of the positions, and to select for at least one of said positions a minimum or reduced time delay value whatever the initial setting of the means for adjusting the time delay setting (9).

2. Protection device according to claim 1 **characterized in that** said switching means (22) comprise a common point (C) connected to a reference line (V0) and connected to outputs,
- at least a first minimum time delay selection output being connected to said means for adjusting the time delay setting (9) to supply a minimum time delay control signal,
- at least a second fault current threshold selection output being connected to at least one rating change resistor (12).

3. Protection device according to claim 2 **characterized in that** said minimum time delay selection output is polarized by a polarization line (V2).

4. Protection device according to any one of the claims 1 to 3 **characterized in that** the rating change resistors (12) are connected in parallel with the current measuring means (1), via the contact (21) of the switching means (22).

5. Protection device according to any one of the claims 1 to 3 **characterized in that** the rating change resistors (12) are connected in series with the current measuring means (1), via the contact (21) of the switching means (22).

6. Protection device according to any one of the claims 1 to 5 **characterized in that** said switching means (22) are formed by an axially-operated rotary selector switch.

7. Protection device according to any one of the claims 1 to 6 **characterized in that** the means for adjusting the current threshold setting (7) select said minimum time delay value by supplying a minimum time delay control signal (Vt) to time delay cancellation means (10) of the processing unit (2).

8. Protection device according to claim 7 **characterized in that** the means for adjusting the time delay setting (9) comprise a variable resistor (13) mounted in series with a capacitor (14) connected to a reference line (V0) and that the time delay cancellation means (10) command opening or closing of the connection between said capacitor and the reference line (V0).

9. Protection device according to claims 7 and 8 **characterized in that** the time delay cancellation means (10) comprise an input (T) to receive the minimum time delay control signal (Vt), comparison means (15) to compare said control signal with a reference threshold (VR1) and interruption means (16) connected in series with the time delay capacitor (14) to reduce or cancel the time delay of a trip.

10. Circuit breaker comprising opening contacts (30) connected to electric current lines (3) and a relay (31) to command opening of said contacts (30) via a mechanism (32) **characterized in that** it comprises a differential protection device according to any one of the foregoing claims comprising, differential current measuring means (1) arranged on said current lines (3), a processing unit (2) supplying a trip signal to said relays if a fault is detected and means for adjusting the current threshold setting having a position to select a minimum time delay value.
